(19) Europäisches Patentamt
European Patent Office
Office européen des brevets

(11) **EP 2 944 572 B1**

(12) **FASCICULE DE BREVET EUROPEEN**

(45) Date de publication et mention
de la délivrance du brevet:
**21.11.2018 Bulletin 2018/47**

(51) Int Cl.:
**B64D 43/02** (2006.01)      **G01P 5/00** (2006.01)
**G01P 13/02** (2006.01)

(21) Numéro de dépôt: **15001228.4**

(22) Date de dépôt: **24.04.2015**

(54) **GIRAVION ÉQUIPÉ D'UN ANÉMOMÈTRE PLACÉ AU SOMMET D'UNE DÉRIVE ARRIÈRE DU GIRAVION**

DREHFLÜGER MIT EINEM AN DER SPITZE EINER HECKFLOSSE ANGEBRACHTEN ANEMOMETER

ROTORCRAFT PROVIDED WITH AN ANEMOMETER LOCATED AT THE TOP OF A REAR STABILISER OF THE ROTORCRAFT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.05.2014 FR 1401064**

(43) Date de publication de la demande:
**18.11.2015 Bulletin 2015/47**

(73) Titulaire: **Airbus Helicopters**
**13725 Marignane Cedex (FR)**

(72) Inventeurs:
• **Certain, Nicolas**
**13090 Aix en Provence (FR)**

• **Delecroix, Olivier**
**13510 Eguilles (FR)**

(74) Mandataire: **GPI & Associés**
**EuroParc de Pichaury**
**Bâtiment B2 - 1er Etage**
**1330, rue Guillibert de la Lauzière**
**13856 Aix-en-Provence Cedex 3 (FR)**

(56) Documents cités:
**EP-A1- 1 462 806      WO-A1-01/74663**
**US-A1- 2006 027 702**

EP 2 944 572 B1

**Description**

La présente invention est du domaine des installations anémométriques équipant les giravions.

Les aéronefs sont classiquement équipés d'une installation anémométrique fournissant au pilote une information relative à la vitesse-air de l'aéronef, c'est-à-dire la vitesse de déplacement dudit aéronef par rapport à l'air dans lequel il évolue. Une telle installation met classiquement en oeuvre au moins un anémomètre mesurant les caractéristiques de la vitesse du flux d'air environnant l'aéronef et plus particulièrement ses composantes vectorielles de vitesse respectivement orientées sensiblement suivant au moins l'axe longitudinal et/ou l'axe transversal de l'aéronef.

Dans ce contexte, l'installation anémométrique fournit au pilote du giravion, par voie d'affichage notamment, la vitesse relative de l'aéronef par rapport audit flux d'air l'environnant, dite vitesse-air, à partir des mesures fournies par l'anémomètre et définies selon au moins une composante longitudinale de vitesse-air, voire aussi une composante latérale de vitesse-air.

La vitesse-sol de l'aéronef est classiquement fournie par un instrument de bord équipant l'aéronef, tel que typiquement un appareil de localisation satellitaire par exemple. Dans ces conditions, la connaissance de la vitesse-air de l'aéronef permet d'identifier les caractéristiques du vent auquel est soumis l'aéronef.

Les anémomètres traditionnellement utilisés en aéronautique mettent couramment en oeuvre au moins un tube de Pitot. De tels anémomètres permettent de déduire la vitesse-air de l'aéronef à partir des mesures fournies par le ou les tubes de Pitot de la pression statique de l'air et de la pression totale de l'air environnant l'anémomètre.

Cependant, la principale source d'erreurs d'un anémomètre réside dans l'impossibilité de l'aligner en permanence avec le flux d'air environnant l'aéronef. En effet, certains anémomètres ne peuvent pas s'aligner avec le flux d'air.

Dans ce contexte, il a été développé des anémomètres omnidirectionnels procurant des mesures de la vitesse-air définie selon des composantes vectorielles, dont notamment au moins une composante longitudinale et une composante latérale.

Classiquement, les composantes vectorielles de la vitesse-air mesurée par un anémomètre omnidirectionnel sont identifiées selon les axes d'extension générale de l'aéronef considéré en station au sol. La composante longitudinale de la vitesse-air est communément définie suivant l'axe longitudinal d'extension de l'aéronef s'étendant entre l'avant et l'arrière de l'aéronef. La composante latérale de la vitesse-air est communément définie suivant l'axe transversal d'extension de l'aéronef s'étendant entre les bords latéraux droite et gauche de l'aéronef.

Il est plus particulièrement utilisé en aéronautique des anémomètres omnidirectionnels de type LORAS (d'après l'acronyme anglais LOw-Range Airspeed System). Les anémomètres de type LORAS exploitent un couple de tubes de Pitot montés tournants et placés tête-bêche l'un par rapport à l'autre, de sorte que lesdits anémomètres de type LORAS peuvent mesurer la composante longitudinale et la composante latérale de la vitesse-air.

Pour mesurer la vitesse-air d'un aéronef, il est aussi connu des anémomètres omnidirectionnels à télédétection exploitant des ondes lumineuses de type à faisceaux LASER (d'après l'acronyme anglais Light Amplification by Stimulated Emission of Radiation) ou des ondes sonores de type à ultrasons.

Par exemple les anémomètres optiques, tels que les anémomètres LIDAR (d'après l'acronyme anglais LIght Détection and Ranging), permettent de mesurer la vitesse-air d'un aéronef par émission/réception séquentielle à fréquence donnée d'un faisceau lumineux LASER.

Par exemple encore, les anémomètres ultrasoniques, tels que par exemple l'anémomètre décrit par le document US 4 031 756 (HONEYWELL), permettent de mesurer la vitesse-air d'un aéronef par émission/réception d'ondes ultrasoniques.

Dans ce contexte technologique relevant des installations anémométriques pour aéronef, il est à considérer parmi les aéronefs motorisés les spécificités propres aux giravions.

En effet, les giravions sont des aéronefs à voilure(s) tournante(s) dont au moins la sustentation est procurée par au moins un rotor principal à axe d'entrainement en rotation sensiblement vertical. Dans le cadre spécifique d'un hélicoptère, le rotor principal procure non seulement la sustentation du giravion, mais aussi sa propulsion suivant des directions quelconques de progression.

Les giravions sont aussi couramment équipés d'au moins un rotor annexe à axe d'entraînement en rotation sensiblement horizontal. Un tel rotor annexe constitue notamment un dispositif anticouple procurant la stabilisation et le guidage en lacet du giravion. Un tel rotor annexe est par exemple un rotor arrière installé à l'extrémité d'une poutre de queue du giravion et parfois entouré d'un carénage permettant entre autres avantages de réduire les nuisances sonores générées par le rotor arrière.

Les giravions sont aussi couramment équipés d'empennages permettant de stabiliser voire de modifier l'attitude en vol du giravion.

De tels empennages sont par exemple formés d'ailes orientées généralement suivant un plan sensiblement horizontal d'extension du giravion défini par les axes longitudinal et transversal d'extension du giravion considéré en station au sol. De tels empennages sont par exemple encore formés de dérives orientées généralement suivant un plan sensiblement vertical d'extension du giravion considéré en station au sol, ledit plan vertical étant orienté perpendiculairement audit plan horizontal. De telles dérives sont classiquement placées à l'arrière du giravion, en bout d'une poutre de queue notamment, en étant couramment inclinées par rapport au plan vertical d'extension du giravion.

Par rapport aux autres aéronefs, la mesure de la vitesse-air d'un giravion pose des problèmes spécifiques résultant notamment de la présence des rotors dont la rotation perturbe le flux d'air environnant le giravion. Dans ce contexte, il se pose le problème de la localisation de l'anémomètre à bord du giravion permettant d'obtenir une information relative à la vitesse-air du giravion la plus pertinente possible.

En effet, le ou les rotors produisent un souffle résultant de leur propre rotation. Il en ressort que la pertinence des mesures fournies par les anémomètres pour obtenir une information relative à la vitesse-air du giravion est dépendante d'une implantation de l'anémomètre sur le giravion le préservant au mieux des effets aérodynamiques générés par le ou les rotors.

Dans ces conditions en ce qui concerne notamment les anémomètres à tubes de Pitot, l'emplacement de l'anémomètre à bord du giravion est par exemple choisi au-dessus et dans l'axe d'entraînement en rotation du rotor principal, tel que décrit par le document US 2006/0027702 ou encore à l'avant du giravion tel que décrit notamment par les documents WO 01/74663 et EP1 462 806.

En ce qui concerne les anémomètres à télédétection, leur emplacement à bord du giravion est classiquement choisi à l'avant du giravion et plus spécifiquement au nez du giravion, en orientant l'anémomètre face à la direction frontale de progression du giravion.

Il se pose aussi le problème de la mesure de la vitesse-air du giravion sur l'ensemble de son enveloppe de vol.

En effet par rapport aux autres aéronefs motorisés, les giravions présentent la particularité de pouvoir évoluer en vol stationnaire et/ou à basses vitesses typiquement considérées inférieures à 50 Kt (50 noeuds). Cependant à des vitesses inférieures à 50 kt, les anémomètres utilisés à simple tube de Pitot, aussi performants soient-ils, ne procurent pas des mesures fiables de la vitesse-air du giravion. En effet, un tube de Pitot a une précision d'autant plus faible que la vitesse air est faible.

Il est habituel d'avertir le pilote de l'indisponibilité d'une information relative à la vitesse-air du giravion lorsqu'il évolue à basses vitesses. Plus particulièrement lorsque le giravion évolue à des vitesses supérieures aux basses vitesses, la vitesse-air du giravion est calculée à partir des mesures fournies par l'anémomètre et est communiquée par voie d'affichage au pilote. A basses vitesses de progression du giravion, une information d'indisponibilité de la vitesse-air du giravion est alors couramment affichée.

C'est pourquoi une recherche constante dans le domaine des giravions vise à fournir au pilote les indications les plus fiables possibles relatives à la vitesse-air du giravion évoluant à basses vitesses et/ou en vol stationnaire. Il a été développé à cet effet des systèmes de calcul permettant de déterminer la vitesse-air d'un giravion à partir des commandes de vol opérées par le pilote.

Par exemple, la vitesse-air du giravion est déduite en prenant en compte l'attitude globale en vol du giravion identifiée par l'état courant de la mécanique de vol, tel que par détection de la variation du pas des pales du ou des rotors, rotor principal notamment. On pourra par exemple se reporter à ce propos aux documents FR2 567 270 (DURAND) et FR 2 648 233 (CROUZET).

Cependant, de tels systèmes de calcul sont complexes et coûteux. Les mesures fournies par les anémomètres à simple tube de Pitot étant fiables aux vitesses élevées de progression du giravion, il en ressort dans la pratique qu'il est persistant d'utiliser un anémomètre à simple tube de Pitot pour mesurer la vitesse-air d'un giravion au détriment de l'obtention d'une telle information lorsque le giravion évolue à basses vitesses, notamment pour les giravions communément classifiés comme légers et particulièrement recherchés les moins onéreux possibles.

Il apparaît en conséquence opportun de poursuivre la recherche visant à obtenir au moyen d'un anémomètre une mesure la plus fiable possible de la vitesse-air d'un giravion évoluant à basses vitesses.

A cette fin, la démarche habituelle des concepteurs vise alors à perfectionner et/ou à concevoir des anémomètres aptes à fournir au pilote une mesure de la vitesse-air du giravion lorsqu'il évolue à des vitesses potentiellement basses. Pour obtenir des mesures les plus fiables possibles à basses vitesses d'évolution du giravion, les anémomètres sont classiquement réglés dès leur conception conformément à des plages de mesures données.

Dans ce contexte, la présente invention vise à proposer une solution permettant d'exploiter un anémomètre omnidirectionnel, indifféremment de type à tube(s) tournant de Pitot ou de type à télédétection, pour mesurer la vitesse-air d'un giravion y compris dans le cas où le giravion évolue à des vitesses inférieures à 50 kt.

La méthode de la présente invention est une méthode de calcul et d'affichage de la vitesse-air courante d'un giravion. Le giravion comporte notamment au moins une dérive arrière ainsi que des rotors comprenant au moins un rotor principal procurant classiquement au moins essentiellement la sustentation principale du giravion et un rotor arrière procurant classiquement au moins le guidage en lacet du giravion.

La méthode de la présente invention comprend une opération de calcul de la vitesse-air courante du giravion à partir de mesures fournies par au moins un anémomètre omnidirectionnel. Suite à ladite opération de calcul, la méthode comprend aussi une opération d'affichage par un écran de la vitesse-air courante du giravion déduite de ladite opération de calcul.

Tel que classiquement, l'anémomètre omnidirectionnel fournit des mesures de la vitesse d'un flux d'air l'environnant. A partir des mesures fournies par l'anémomètre omnidirectionnel, les moyens de calcul identifient les amplitudes respectives des composantes vectorielles caractérisant la vitesse du flux d'air mesuré par l'anémomètre omnidirectionnel, dont au moins une composante longitudinale et une composante latérale.

Bien évidemment, les orientations respectives telles que longitudinale et latérale des composantes vectorielles de la vitesse du flux d'air mesuré par l'anémomètre ainsi que celles de la vitesse-air du giravion calculée sont identifiées et qualifiées suivant les orientations typiques d'extension du giravion telles que respectivement longitudinale et transversale. On rappelle concernant les orientations typiques d'extension du giravion, que les notions de « horizontal », de « vertical » et de « transversal » sont des notions relatives classiquement considérées par rapport à la position du giravion considéré au sol.

Typiquement, la direction longitudinale d'extension d'un giravion est identifiée selon un axe X s'étendant entre l'avant et l'arrière du giravion, la direction verticale d'extension du giravion est identifié selon un axe Z s'étendant entre le sommet et la base du giravion, la direction transversale d'extension du giravion étant identifiée selon un axe Y s'étendant entre les bords latéraux du giravion, les axes X, Y et Z définissant un repère orthonormé identifiant les axes de progression du giravion.

Selon une définition générale de la méthode de la présente invention, l'opération de calcul de la vitesse-air courante (TAS) du giravion est remarquable en ce qu'elle est effectuée à partir de mesures fournies par au moins un anémomètre omnidirectionnel implanté au sommet de la dérive arrière du giravion. Un tel anémomètre omnidirectionnel est ainsi désigné anémomètre de dérive.

Il est apparu qu'une telle démarche inhabituelle permettait d'obtenir une mesure fiable et pertinente de la vitesse-air courante du giravion, notamment lorsque le giravion évolue en vol stationnaire et/ou à basses vitesses, voire à vitesses transitoires notamment en phase de décollage et d'atterrissage du giravion, et cela plus particulièrement y compris lorsque le giravion évolue près du sol et que dans ces conditions le souffle produit par le rotor principal perturbe considérablement l'air environnant le giravion.

En effet près du sol, le souffle du rotor principal génère classiquement des perturbations aérodynamiques importantes de l'air, couramment dénommées par « effet de sol ». Il est apparu que la protection de l'anémomètre de dérive offerte par son implantation au sommet de la dérive arrière permettait d'identifier la vitesse-air du giravion de manière fiable et pertinente, sous condition d'une correction des mesures fournies par l'anémomètre de dérive en fonction des effets produits par le flux d'air généré par la rotation du rotor principal.

Une telle protection de l'anémomètre de dérive peut de surcroît être aisément renforcée par un bouclier placé à la base de l'anémomètre de dérive en interposition entre la dérive et l'anémomètre de dérive. Un tel bouclier constitue avantageusement un obstacle à l'écoulement d'air le long de la dérive vers l'anémomètre de dérive.

Ainsi, des anémomètres de dérive tels des anémomètres omnidirectionnels à télédétection exploitant des ondes lumineuses de type à faisceaux LASER peuvent avantageusement être utilisés pour mesurer la vitesse-air de l'aéronef. En effet, de tels anémomètres de dérive permettent notamment de s'affranchir de toute calibration particulière due à la proximité des rotors.

Par ailleurs, il est aussi apparu que la correction des mesures fournies par l'anémomètre de dérive pouvait être facilement opérée par l'application de fonctions affines de structures simples calibrées en vol d'essai.

En pratique, la vitesse-air courante du giravion évoluant à des vitesses inférieures ou égales à au moins un seuil de vitesse-air prédéfini, peut être calculée par correction des mesures fournies par l'anémomètre de dérive en fonction des effets produits par le flux d'air généré par la rotation du rotor principal sur les caractéristiques de la vitesse du flux d'air mesuré par l'anémomètre de dérive.

Il est bien évidemment compris dans le contexte des buts recherchés par la présente invention que ledit au moins un seuil de vitesse-air est identifié au moins conformément à une évolution du giravion en vol stationnaire et/ou à basses vitesses, voire encore à une évolution du giravion à vitesses transitoires entre basses vitesses et vitesses élevées d'évolution du giravion en vol de croisière.

On rappelle que lesdites basses vitesses sont communément identifiées inférieures à 40 kt voire inférieures à 50 kt, et que les dites vitesses transitoires sont communément considérées comprises entre 50 kt et 60 kt, voire 75 kt selon les capacités propres de propulsion du giravion.

La vitesse d'évolution du giravion peut être identifiée par un instrument de bord équipant couramment les giravions, tel qu'un appareil de localisation satellitaire communément désigné par GPS (d'après l'acronyme anglais Global Positioning System).

Pour identifier la vitesse d'évolution du giravion il est cependant préféré d'exploiter les mesures fournies par l'anémomètre de dérive, réglé de conception conformément à une plage de vitesse-air inférieure à des vitesses-air élevées, l'anémomètre de dérive étant apte à identifier une vitesse-air du giravion inférieure audit au moins un seuil de vitesse-air.

Tel que visé plus loin, le giravion est potentiellement équipé d'un anémomètre annexe. Pour identifier la vitesse d'évolution du giravion, les mesures fournies par l'anémomètre annexe peuvent aussi être exploitées pour identifier une vitesse-air du giravion inférieure audit au moins un seuil de vitesse-air.

Cependant tel que visé plus loin, l'anémomètre annexe est de préférence réglé de conception conformément à une plage de vitesse-air de fonctionnement supérieure audit au moins un seuil de vitesse-air, notamment à une plage de fonctionnement à des vitesses-air élevées.

Par ailleurs, il est fait le choix d'identifier les effets produits par le flux d'air généré par la rotation du rotor principal sur le flux d'air dont la vitesse est mesurée par l'anémomètre de dérive à partir d'une démarche aisée de prise en compte de la puissance consommée par le rotor principal dans l'application d'une règle de correction des mesures fournies par l'anémomètre de dérive.

Tel que connu dans le domaine des giravions, la puissance mécanique consommée par le rotor principal peut être par exemple évaluée selon le pas collectif courant appliqué aux pales du rotor principal et notamment identifié par les commandes de vol opérées par le pilote du giravion, indifféremment pilote humain ou pilote automatique.

Par exemple encore, la puissance mécanique consommée par le rotor principal peut être évaluée selon le produit de la vitesse de rotation du rotor principal par le couple résistant du rotor principal opposé à l'encontre de son entraînement en rotation par un groupe de motorisation équipant le giravion, ou plus simplement par ledit couple sous condition d'une vitesse de rotation constante du rotor principal.

Il est aussi fait le choix de structurer ladite règle de correction sous forme de fonctions dont des fonctions affines appliquées de préférence successivement, les valeurs des paramètres de correction intégrés auxdites fonctions étant calibrées en vol d'essai.

De telles fonctions affines sont notamment classiquement identifiées par des paramètres de calcul comprenant au moins un coefficient de pondération et au moins une valeur de sommation prédéfinie (nulle, positive ou négative).

Il est plus spécifiquement constaté que lesdites fonctions intégrées à la règle de correction sont aptes, à partir des mesures fournies par l'anémomètre de dérive, à identifier et à corriger respectivement une composante longitudinale et une composante latérale de la vitesse du flux d'air mesuré par l'anémomètre de dérive.

Dans ce contexte, une valeur de sommation peut être appliquée pour prendre en compte la puissance mécanique consommée par le rotor principal.

La calibration en vol d'essai de la règle de correction est par exemple opérée en l'absence de vent. Les mesures fournies par l'anémomètre de dérive au cours du vol d'essai sont comparées avec la vitesse d'évolution du giravion identifiée par ledit instrument de bord. Il est bien évidemment compris que d'autres techniques connues de calibration d'un appareil équipant un giravion en vol d'essai peuvent être utilisées, telles qu'en présence de vent dont les caractéristiques sont identifiées par une station météorologique au sol.

A partir d'une telle comparaison, les valeurs respectives des paramètres de correction intégrés à la règle de correction sont identifiées pour un quelconque giravion de même structure que la structure du giravion d'essai et dans les mêmes conditions d'implantation de l'anémomètre de dérive à bord de ces giravions.

A partir de l'application des dites fonctions, les mesures de la vitesse du flux d'air mesuré par l'anémomètre de dérive peuvent être corrigées par rectification d'une part des orientations et d'autre part des valeurs de l'amplitude individuelle de la composante longitudinale et de la composante latérale de la vitesse du flux d'air mesuré par l'anémomètre de dérive. Les perturbations des mesures fournies par l'anémomètre de dérive générées par l'écoulement de l'air le long de la dérive, peuvent être prises en compte en filtrant les données fournies par l'anémomètre de dérive.

Ainsi et selon une forme préférée de réalisation, ladite correction des mesures fournies par l'anémomètre de dérive est opérée selon au moins l'application d'une règle de correction rectifiant individuellement au moins les valeurs d'amplitude et les orientations par rapport aux axes d'extension générale du giravion des composantes vectorielles de la vitesse du flux d'air mesuré par l'anémomètre de dérive.

De préférence, ladite correction des mesures fournies par l'anémomètre de dérive comprend en outre un filtrage de données appliquées aux données issues des mesures fournies par l'anémomètre de dérive, indifféremment préalablement ou postérieurement à la correction appliquée aux mesures fournies par l'anémomètre de dérive.

Plus particulièrement, la correction des mesures fournies par l'anémomètre de dérive est opérée selon au moins les modalités spécifiques suivantes, de préférence appliquées successivement.

En premier lieu, il est appliqué une correction de phase rectifiant l'orientation angulaire individuellement de chacune des composantes vectorielles de la vitesse du flux d'air mesuré par l'anémomètre de dérive par rapport aux axes d'extension longitudinal et transversal du giravion.

Ladite correction de phase est potentiellement appliquée en prenant en compte au moins une valeur de correction angulaire prédéfinie. A titre indicatif, il a été constaté en vol d'essai que ladite correction de phase était potentiellement comprise entre 5° et 15° selon la structure du giravion et selon les modalités d'implantation de l'anémomètre de dérive au sommet de la dérive arrière. Ladite correction de phase permet notamment de corriger les effets produits par la giration du flux d'air généré par le souffle du rotor principal sur les mesures fournies par l'anémomètre de dérive.

En deuxième lieu, il est appliqué une correction d'amplitude rectifiant individuellement les amplitudes de chacune des composantes vectorielles de la vitesse du flux d'air mesuré par l'anémomètre de dérive.

Ladite correction d'amplitude permet notamment de corriger les effets résultant de la striction du flux d'air généré par le souffle du rotor principal et prend notamment en compte un paramètre de correction relatif à la puissance mécanique consommée par le rotor principal.

L'application du paramètre de correction relatif à la puissance mécanique consommée par le rotor principal est plus particulièrement dédiée à une correction de valeur de la composante longitudinale de la vitesse du flux d'air mesuré par l'anémomètre de dérive, particulièrement affectée par la striction du flux d'air généré par le souffle du rotor principal.

En troisième lieu, il est appliqué un filtrage de données par un filtre passe-bas traitant les données issues des mesures fournies par l'anémomètre de dérive, indifféremment directement fournies par l'anémomètre de dérive ou après correction des données fournies par l'anémomètre de dérive par application de ladite règle de correction.

Ledit filtrage de données permet d'éliminer des données dont la pertinence est affectée par l'écoulement de l'air le long de la dérive perturbé par le flux d'air généré par le souffle du rotor principal et dont les caractéristiques dépendent notamment de la conformation aérodynamique de la dérive. Bien évidemment, les caractéristiques dudit filtre passe-bas sont identifiées au cours dudit vol d'essai.

Selon une forme avantageuse de réalisation permettant de prendre aisément en compte les effets produits par la rotation du rotor principal sur les caractéristiques de la vitesse du flux d'air mesuré par l'anémomètre de dérive, la règle de correction intègre dans sa généralité des paramètres de correction des mesures fournies par l'anémomètre de dérive dont les valeurs sont identifiées par calibration de la règle de correction en vol d'essai.

Une telle calibration de la règle de correction en vol d'essai est typiquement effectuée à bord d'un giravion d'essai de structure donnée équipé d'un appareil d'essai, tel qu'un anémomètre d'essai conforme à l'anémomètre de dérive dans le cadre de la présente invention. Par la suite, la règle de correction peut être appliquée aux mesures fournies par un appareil standard de même structure que l'appareil d'essai et installé à bord d'un quelconque giravion de structure similaire au giravion d'essai conformément aux conditions d'installation de l'appareil d'essai à bord du giravion d'essai.

La règle de correction est de préférence composée de fonctions dont certaines affines appliquées successivement pour corriger les mesures fournies par l'anémomètre de dérive.

L'une quelconque au moins desdites fonctions affines comprend notamment un paramètre de correction prenant en compte un critère de correction relatif à la puissance mécanique consommée par le rotor principal. La prise en compte dudit critère de correction est notamment effectuée par la prise en compte d'un paramètre de correction relatif indifféremment à l'angle de pas collectif courant des pales du rotor principal ou, pour notamment une vitesse de rotation donnée du rotor principal, au couple résistant opposé par le rotor principal à l'encontre de son entraînement en rotation par un groupe de motorisation équipant le giravion.

Conformément à des modalités particulières de mise en oeuvre d'une méthode conforme à l'invention, la correction des mesures fournies par l'anémomètre de dérive est opérée selon au moins les modalités suivantes, de préférence appliquées successivement :

-) application de premières fonctions de calcul calculant une vitesse-air du giravion, dite première vitesse-air corrigée. Lesdites premières fonctions identifient individuellement une composante longitudinale et une composante latérale de la première vitesse-air corrigée selon les modalités suivantes :

$$V_{C1}X = V_M * \cos (V_A + A_1)$$

$$V_{C1}Y = V_M * \sin (V_A + A_2)$$

dans lesquelles premières fonctions de calcul, $V_{C1}X$ et $V_{C1}Y$ sont les valeurs respectives de la composante longitudinale et de la composante latérale de la première vitesse-air corrigée, $V_M$ est l'amplitude de la vitesse du flux d'air mesuré par l'anémomètre de dérive, $V_A$ est la direction d'orientation du flux d'air mesuré par l'anémomètre de dérive, $A_1$ et $A_2$ sont des constantes prédéfinies de correction angulaire des composantes vectorielles de la vitesse du flux d'air mesuré par l'anémomètre de dérive.

Les valeurs respectives desdites constantes $A_1$ et $A_2$ sont identifiées par une opération de calibration en vol d'essai des premières fonctions de calcul, en étant potentiellement différentes ou identiques. A titre indicatif, les valeurs respectives desdites constantes $A_1$ et $A_2$ varient chacune individuellement entre 5° et 15° selon la structure du giravion et selon les modalités d'implantation de l'anémomètre de dérive au sommet de la dérive arrière.

-) application de deuxièmes fonctions de calcul affines calculant une vitesse-air du giravion, dite deuxième vitesse-air corrigée. Lesdites deuxièmes fonctions de calcul identifient des valeurs des amplitudes respectives de la composante longitudinale et de la composante latérale de la première vitesse-air corrigée selon les modalités suivantes :

$$V_{C2}X = K1{*}\ V_{C1}X + K2{*}A_{PC} + N1$$

$$V_{C2}Y = K3{*}\ V_{C1}Y + N2$$

dans lesquelles deuxièmes fonctions de calcul, $V_{C2}X$ et $V_{C2}Y$ sont les valeurs respectives de la composante longitudinale et de la composante latérale de la deuxième vitesse-air corrigée, K1, K2 et K3 sont des constantes dont les valeurs respectives sont identifiées par une opération de calibration en vol d'essai des deuxièmes fonctions de calcul, $A_{PC}$ est l'angle de pas collectif courant des pales du rotor principal ; N1 et N2 sont des valeurs de sommation prédéfinies selon la pertinence recherchée de la mesure de la vitesse-air courante du giravion.

A titre indicatif, les valeurs de N1 et N2 sont de préférence choisies de 1 kt (1 noeud), N2 étant une valeur positive ou négative selon le sens de rotation du rotor principal.

-) application d'un filtrage de données par un filtre passe-bas des valeurs individuelles de la composante longitudinale et de la composante latérale de la deuxième vitesse-air corrigée.

A titre indicatif selon la conformation aérodynamique de la dérive et selon les modalités d'implantation de l'anémomètre de dérive à bord du giravion, le filtrage des valeurs de la composante longitudinale et de la composante latérale de la deuxième vitesse-air corrigée est notamment opéré au moyen de filtres passe-bas cadencés à une fréquence comprise entre 0,15 Hz (0,15 Hertz) et 0,8 Hz.

Dans le cas d'une évolution du giravion en vol stationnaire et/ou à basse vitesses, la vitesse-air courante du giravion affichée par l'écran est la vitesse-air calculée de préférence à l'issue de l'application dudit filtrage de données.

Selon une forme préférée de l'invention, la correction des mesures fournies par l'anémomètre de dérive est opérée en prenant en compte plusieurs dits seuils de vitesse, dont au moins :

-) un premier seuil de vitesse-air conforme à une évolution du giravion à basses vitesses. Dans ce cas, un premier mode de correction des mesures fournies par l'anémomètre de dérive est appliqué dans le cas où le giravion évolue à une vitesse-air inférieure ou égale au premier seuil de vitesse-air.

-) un deuxième seuil de vitesse-air conforme à une évolution du giravion à vitesses transitoires entre basses vitesses et vitesses élevées d'évolution du giravion. Dans ce cas, un deuxième mode de correction des mesures fournies par l'anémomètre de dérive est appliqué dans le cas où le giravion évolue à une vitesse-air supérieure au premier seuil de vitesse-air et inférieure ou égale audit deuxième seuil de vitesse-air.

Ledit deuxième mode de correction comprend de préférence une opération de correction complémentaire des mesures fournies par l'anémomètre de dérive au moyen de troisièmes fonctions de calcul affines. Les troisièmes fonctions de calcul affines prennent notamment en compte un paramètre de correction relatif à des mesures complémentaires fournies par un anémomètre annexe installé à bord du giravion dans un emplacement au mieux dégagé du flux d'air produit par le souffle du rotor principal, notamment tel que classiquement au nez du giravion.

Selon une forme préférée de réalisation, lesdites troisièmes fonctions de calcul identifient individuellement une composante longitudinale et une composante latérale d'une troisième vitesse-air corrigée selon les modalités suivantes :

$$V_{C3}X = K4{*}\ V_{C2}X + (1-K5){*}VX$$

$$V_{C3}Y = K6{*}\ V_{C2}X + (1-K7){*}VY$$

dans lesquelles troisièmes fonctions de calcul, $V_{C3}X$ et $V_{C3}Y$ sont les valeurs respectives de la composante longitudinale et de la composante latérale de la troisième vitesse-air corrigée, K4, K5, K6 et K7 sont des constantes dont les valeurs respectives sont identifiées par une opération de calibration en vol d'essai des troisièmes fonctions de calcul, VX et VY sont les valeurs respectives de la composante longitudinale et de la composante latérale de la vitesse du flux d'air mesuré par l'anémomètre annexe.

A des vitesses transitoires d'évolution du giravion, la vitesse-air courante du giravion affichée par l'écran est la troisième vitesse-air corrigée rectifiée par un filtrage de données notamment appliqué aux valeurs de la composante longitudinale et de la composante latérale de la troisième vitesse-air corrigée.

A des vitesses élevées d'évolution du giravion à une vitesse-air supérieure au deuxième seuil de vitesse-air, les mesures fournies par l'anémomètre annexe sont exploitées pour afficher la vitesse-air courante du giravion.

La présente invention a aussi pour objet un giravion équipé d'une installation anémométrique pour la mise en oeuvre d'une méthode telle qu'elle vient d'être décrite.

L'installation anémométrique équipant le giravion comprend classiquement au moins un anémomètre omnidirectionnel, des moyens de calcul déduisant la vitesse-air courante du giravion par exploitation des mesures fournies par ledit au moins un anémomètre omnidirectionnel et un écran d'affichage de la vitesse-air courante du giravion déduite par les moyens de calcul.

Selon la présente invention, le giravion est principalement reconnaissable en ce que ledit au moins un anémomètre omnidirectionnel, dit anémomètre de dérive, est implanté au sommet d'une dérive arrière du giravion notamment située à l'extrémité d'une poutre de queue du giravion.

Les moyens de calcul comprennent des moyens de comparaison entre la vitesse-air du giravion potentiellement fournie par l'anémomètre de dérive voire le cas échéant par l'anémomètre annexe et au moins un seuil de vitesse-air prédéfini.

Les moyens de calcul intègrent une règle de correction apte à corriger les mesures fournies par l'anémomètre de dérive en fonction des effets produits par la rotation d'au moins un rotor principal équipant le giravion sur les caractéristiques de la vitesse du flux d'air mesuré par l'anémomètre de dérive.

Lesdits moyens de calcul intègrent notamment ladite règle de correction, de préférence sous forme d'un algorithme structuré en fonctions dont certaines affines, apte à corriger les mesures fournies par l'anémomètre de dérive en fonction des effets produits par la rotation d'au moins un rotor principal équipant le giravion sur les caractéristiques de la vitesse du flux d'air mesuré par l'anémomètre de dérive et plus particulièrement en fonction de la puissance consommée par le rotor principal.

Ladite règle de calcul est avantageusement calibrée en vol d'essai à bord d'un giravion d'essai de même structure que le giravion dont la vitesse-air courante est à identifier et à afficher.

Selon une forme préférée de réalisation du giravion, l'anémomètre de dérive est plus particulièrement implanté au sommet d'une dérive arrière du giravion rehaussant un carénage entourant un rotor arrière équipant le giravion, dans le plan général du disque rotor dudit rotor arrière. Un tel carénage participe à la protection de l'anémomètre de dérive, notamment vis-à-vis du flux d'air généré par le souffle du rotor arrière.

L'anémomètre de dérive est de préférence équipé à sa base d'un bouclier de protection vis-à-vis du flux d'air s'écoulant le long de la dérive arrière. Un tel bouclier de protection est par exemple agencé en plaque orientée sensiblement suivant le plan horizontal d'extension générale du giravion.

Le giravion est de préférence équipé d'un anémomètre annexe fournissant aux moyens de calcul une mesure complémentaire de la vitesse-air courante du giravion conjointement aux mesures fournies par l'anémomètre de dérive.

Un exemple de réalisation de la présente invention va être décrit en relation avec les figures de la planche unique annexée, dans laquelle :

- la fig.1 est une illustration en perspective d'un giravion selon une forme préférée de réalisation de la présente invention,

- la fig.2 est un schéma illustrant une méthode de mise en oeuvre d'une installation anémométrique équipant le giravion représenté sur la fig.1 selon un exemple de réalisation de la présente invention.

Les organes communs représentés sur les différentes figures sont respectivement identifiés dans les descriptions propres à ces figures avec les mêmes numéros et/ou lettres de référence, sans impliquer leur représentation individuelle sur chacune des figures.

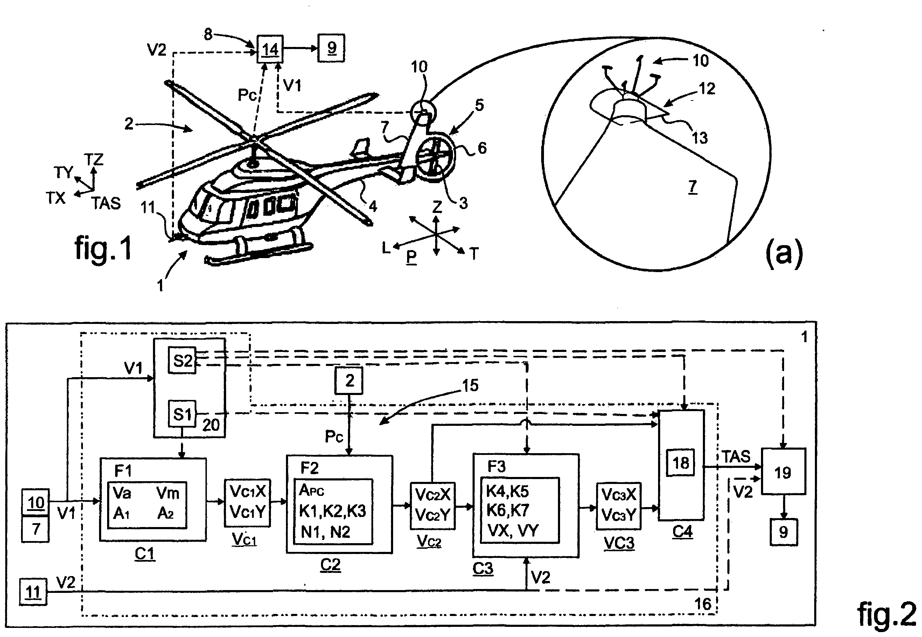

Sur la fig.1, un giravion 1 est classiquement équipé d'un rotor principal 2 procurant essentiellement la sustentation du giravion 1. Sur l'exemple illustré, le giravion 1 est plus particulièrement un hélicoptère, le rotor principal 2 procurant en outre la propulsion du giravion 1 suivant ses différents axes de progression L, T, Z et procurant le guidage du giravion 1 en tangage et en roulis.

Le giravion 1 est en outre équipé d'un rotor annexe 3 installé à l'extrémité d'une poutre de queue 4 du giravion 1. Le rotor annexe 3 procure une stabilisation et un guidage du giravion 1 en lacet. L'extrémité de la poutre de queue 4 est munie d'un fenestron 5 (marque déposée), dont l'agencement ménage un carénage 6 entourant la voilure du rotor annexe 3. La poutre de queue 4 est munie d'une dérive arrière 7 rehaussant le carénage 6, le sommet de la dérive arrière 7 surplombant le disque rotor du rotor annexe 3, voire aussi et de préférence le disque rotor du rotor principal 2.

Le giravion 1 est équipé d'une installation anémométrique 8 permettant de calculer la vitesse-air courante TAS du giravion 1 en vol. Un écran 9 d'affichage permet de fournir au pilote du giravion 1 une information relative à la vitesse-air courante TAS du giravion 1 itérativement calculée à fréquence donnée par l'installation anémométrique 8.

L'installation anémométrique 8 comprend à cet effet un couple d'anémomètres omnidirectionnels 10, 11 fournissant des mesures V1, V2 relatives aux caractéristiques des flux d'air environnant respectivement les anémomètres 10, 11, lesdites mesures V1, V2 étant transmises à un calculateur de bord 14 déduisant la vitesse-air courante TAS du giravion 1 à partir desdites mesures V1, V2.

Un premier anémomètre est un anémomètre de dérive 10 implanté au sommet de la dérive arrière 7. Le carénage 6 entourant de préférence la voilure du rotor arrière 3 protège avantageusement au moins partiellement l'anémomètre de dérive 10 du flux d'air généré par le souffle du rotor arrière 3.

Par ailleurs et en se reportant au détail de la fig.1 représenté sur l'illustration (a), l'anémomètre de dérive 10 est protégé du flux d'air s'écoulant le long de la dérive arrière 7 par un bouclier 12 placé en interposition entre le sommet de la dérive arrière 7 et l'anémomètre de dérive 10.

Sur l'exemple de réalisation illustré, le bouclier 12 est formé d'une plaque 13 orientée dans son plan général suivant un plan sensiblement parallèle au plan horizontal P d'extension du giravion 1. Ledit plan horizontal P d'extension du giravion 1 est classiquement défini par l'axe longitudinal L d'extension entre l'avant et l'arrière du giravion 1 et par l'axe transversal T d'extension du giravion 1, le giravion étant considéré au sol.

Un deuxième anémomètre est un anémomètre annexe 11 implanté sur le giravion en un emplacement au mieux préservé du souffle généré par le rotor principal 2, tel que classiquement au nez du giravion 1 tel qu'illustré voire au sommet d'une perche en surplomb et suivant l'axe d'entraînement en rotation du rotor principal 2 selon une variante analogue non illustrée.

Bien évidemment tel que classiquement en aéronautique, la vitesse-air courante TAS du giravion 1 est identifiée par des composantes vectorielles, dont au moins une composante longitudinale TX et une composante latérale TY, voire encore une composante verticale TZ respectivement orientées suivant l'axe longitudinal L, l'axe transversal T et l'axe vertical Z d'extension générale du giravion.

Sur la fig.2, la vitesse-air courante TAS du giravion 1 évoluant en vol stationnaire et/ou à basses vitesse est déterminée puis affichée par correction des mesures V1 fournies par l'anémomètre de dérive 10. Ladite correction est opérée par application d'une règle de correction 15 mise en oeuvre par des moyens de calcul 16 de l'installation anémométrique 8 mis en oeuvre par le calculateur 14.

La règle de correction 15 comporte des fonctions F1, F2, F3 dont F2 et F3 sont affines permettant de corriger les mesures V1 fournies par l'anémomètre de dérive 10 en prenant en compte les effets produits par le flux d'air généré par le souffle du rotor principal 2 sur les mesures V1 fournies par l'anémomètre de dérive 10. La règle de correction 15 intègre plusieurs paramètres de correction dont les valeurs sont préalablement déterminées au cours d'une opération de calibration de la règle de calcul 15 en vol d'essai.

Préalablement à la correction des mesures V1 fournies par l'anémomètre de dérive 10, la vitesse-air du giravion fournie de préférence par l'anémomètre de dérive 10 est comparée avec des seuils de vitesse S1, S2 prédéfinis par des moyens de comparaison 20 potentiellement intégrés aux moyens de calcul 16. Ces dispositions permettent d'identifier une évolution du giravion 1 à des vitesses inférieures à des basses vitesses et à des vitesses transitoires comprises entre les basses vitesses et des vitesses élevées du giravion 1 évoluant en vol de croisière.

Les valeurs desdits seuils de vitesse S1, S2 identifient typiquement une évolution du giravion 1 à basses vitesses pour un premier seuil de vitesse-air S1 et une évolution du giravion 1 à vitesses transitoires pour un deuxième seuil de vitesse-air S2.

A vitesses élevées d'évolution du giravion 1 supérieures au seuil de vitesse-air S2, la vitesse-air courante du giravion affichée par l'écran 9 correspond aux mesures V1 et/ou V2 fournies par l'un au moins des anémomètres 10, 11 mais de préférence par l'anémomètre annexe 11 réglé de conception pour fonctionner conformément à une plage de vitesse-air élevées..

En effet à vitesses élevées d'évolution du giravion 1, il est considéré que l'influence du souffle du rotor principal 2 sur la pertinence des mesures V2 fournies par l'anémomètre annexe 11 est négligée pour identifier la vitesse-air du giravion 1.

A basses vitesses ou à vitesses transitoires d'évolution du giravion 1, une correction de phase C1 modifiant les orientations respectives des composantes vectorielles de la vitesse du flux d'air mesuré par l'anémomètre de dérive est opérée par application de premières fonctions F1.

Ladite correction de phase C1 vise notamment à corriger l'orientation des composantes vectorielles de la vitesse du flux d'air mesuré par l'anémomètre de dérive 10 par rapport au référentiel du giravion défini par ses axes d'extension X, Y et Z.

Les premières fonctions F1 sont exécutées en exploitant l'amplitude Vm et l'orientation Va de la vitesse du flux d'air courant mesuré par l'anémomètre de dérive 10, ainsi que des constantes A1 et A2 dont les valeurs sont calibrées au cours dudit vol d'essai. La première correction C1 identifie une composante longitudinale $V_{C1}X$ et une composante transversale $V_{C1}Y$ d'une première vitesse-air corrigée $V_{C1}$.

Ensuite, une correction d'amplitude C2 rectifie les valeurs respectives des amplitudes des composantes vectorielles $V_{C1}X$ et $V_{C1}Y$ de la première vitesse-air corrigée $V_{C1}$, par application de deuxièmes fonctions F2.

Les deuxièmes fonctions F2 sont exécutées en prenant notamment en compte la puissance consommée Pc par le rotor principal 2. Il est par exemple plus particulièrement pris en compte à cet effet la valeur courante de l'angle de pas collectif $A_{PC}$ du rotor principal 2.

Les deuxièmes fonctions F2 intègrent des constantes K1, K2 et K3 dont les valeurs sont calibrées au cours dudit vol d'essai et des valeurs de sommation N1, N2 prédéfinies. La correction d'amplitude C2 identifie une composante longitudinale $V_{C2}X$ et une composante transversale $V_{C2}Y$ d'une deuxième vitesse-air corrigée $V_{C2}$ après correction de l'amplitude des composantes de la première vitesse-air corrigée $V_{C1}$.

Spécifiquement pour une vitesse d'évolution du giravion 1 à vitesses transitoires, une correction complémentaire C3 est opérée pour rectifier la deuxième vitesse-air corrigée $V_{C2}$. La correction complémentaire C3 est opérée par application de troisièmes fonctions F3 prenant en compte les mesures complémentaires V2 fournies par l'anémomètre annexe 11.

Les troisièmes fonctions F3 intègrent des constantes K4, K5, K6 et K7 dont les valeurs sont calibrées au cours dudit vol d'essai et prennent en compte les valeurs de la composante longitudinale VX et de la composante latérale VY de la vitesse du flux d'air mesuré par l'anémomètre annexe 11 fournissant lesdites mesures complémentaires V2.

La troisième correction C3 identifie les valeurs respectives d'une composante longitudinale $V_{C3}X$ et d'une composante transversale $V_{C3}Y$ d'une troisième vitesse-air corrigée VC3 après ajustement de la deuxième vitesse-air corrigée $V_{C2}$ en fonction des mesures complémentaires V2 fournies par l'anémomètre annexe 11.

Pour éliminer un bruit de données capté par l'anémomètre de dérive 10 et résultant de l'écoulement de l'air le long de la dérive 7, une quatrième opération de correction par filtrage de données C4 est opérée au moyen de filtres passe-bas 18. Ledit filtrage de données C4 est notamment appliqué à l'issue de l'exécution de la règle de correction 15 tel qu'illustré, ou potentiellement par filtrage des mesures V1 directement fournies par l'anémomètre de dérive 10 selon une variante non représentée.

La vitesse-air courante TAS du giravion 1 est alors affichée sur l'écran 9 lors d'une opération d'affichage 19. En vol stationnaire et/ou à basses vitesses d'évolution du giravion 1, la deuxième vitesse-air corrigée Vc2 est affichée, le cas échéant après filtrage des données par les filtres passe-bas 18.

A vitesses transitoires d'évolution du giravion, la troisième vitesse-air corrigée Vc3 est affichée, le cas échéant après filtrage des données par les filtres passe-bas 18.

A vitesses élevées d'évolution du giravion 1 les mesures V2 fournies par l'anémomètre annexe 11 peuvent être exploitées pour identifier et afficher sur l'écran 9 la vitesse-air TAS du giravion 1.

## Revendications

1. Méthode de calcul et d'affichage de la vitesse-air courante (TAS) d'un giravion (1) comportant au moins une dérive arrière (7) ainsi qu'au moins un rotor principal (2) procurant au moins essentiellement la sustentation principale du giravion (1) et un rotor arrière (3) procurant au moins le guidage en lacet du giravion (1), ladite méthode comprenant une opération de calcul de la vitesse-air courante (TAS) du giravion (1) à partir de mesures (V1, V2) fournies par au moins un anémomètre omnidirectionnel (10,11) et une opération d'affichage (19) par un écran (9) de la vitesse-air courante (TAS) du giravion (1) déduite de ladite opération de calcul,
   **caractérisée en ce que** ladite opération de calcul de la vitesse-air courante (TAS) du giravion (1) est effectuée à partir de mesures (V1, V2) fournies par au moins un anémomètre omnidirectionnel (10) implanté au sommet de ladite dérive arrière (7), ledit au moins un anémomètre omnidirectionnel étant ainsi désigné anémomètre de dérive (10).

2. Méthode selon la revendication 1,
   **caractérisée en ce que** la vitesse-air courante (TAS) du giravion (1) évoluant à des vitesses inférieures ou égales à au moins un seuil de vitesse-air (S1,S2) prédéfini du giravion (1) est calculée par correction des mesures (V1) fournies par l'anémomètre de dérive (10) en fonction des effets produits par le flux d'air généré par la rotation du rotor principal (2) sur les caractéristiques de la vitesse du flux d'air mesuré par l'anémomètre de dérive (10).

3. Méthode selon la revendication 2,
   **caractérisée en ce que** ladite correction des mesures (V1) fournies par l'anémomètre de dérive (10) est opérée selon au moins l'application d'une règle de correction (15) rectifiant au moins les valeurs d'amplitude et les orientations par rapport aux axes d'extension générale (L, T, Z) du giravion (1) des composantes vectorielles de la vitesse du flux d'air mesuré par l'anémomètre de dérive (10).

4. Méthode selon la revendication 3,
   **caractérisée en ce que** ladite correction des mesures (V1) fournies par l'anémomètre de dérive (10) comprend en outre un filtrage de données (C4) appliquées aux données issues des mesures (V1) fournies par l'anémomètre de dérive (10), indifféremment préalablement ou postérieurement à la correction appliquée aux mesures (V1) fournies par l'anémomètre de dérive (10).

**5.** Méthode selon les revendications 3 et 4,
**caractérisée en ce que** la correction des mesures (V1) fournies par l'anémomètre de dérive (10) est plus spécifiquement opérée selon au moins les modalités suivantes :

-) application d'une correction de phase (C1) rectifiant l'orientation angulaire individuellement de chacune des composantes vectorielles de la vitesse du flux d'air mesuré par l'anémomètre de dérive (10) par rapport aux axes d'extension longitudinal et transversal du giravion (1).
-) application d'une correction d'amplitude (C2) rectifiant individuellement les amplitudes de chacune des composantes vectorielles de la vitesse du flux d'air mesuré par l'anémomètre de dérive (10).
-) application d'un filtrage de données (C4) par un filtre passe-bas (18) traitant les données issues des mesures (V1) fournies par l'anémomètre de dérive (10).

**6.** Méthode selon l'une quelconque des revendications 3 à 5,
**caractérisée en ce que** la règle de correction (15) intègre des paramètres de correction des mesures (V1) fournies par l'anémomètre de dérive (10) dont les valeurs sont identifiées par calibration de la règle de correction (15) en vol d'essai.

**7.** Méthode selon l'une quelconque des revendications 3 à 6,
**caractérisée en ce que** la règle de correction (15) est composée de fonctions (F1, F2, F3) dont certaines affines (F2, F3) appliquées successivement pour corriger les mesures (V1) fournies par l'anémomètre de dérive (10).

**8.** Méthode selon la revendication 7,
**caractérisée en ce que** l'une quelconque au moins desdites fonctions affines (F2, F3) comprend un paramètre de correction prenant en compte un critère de correction relatif à la puissance mécanique consommée (Pc) par le rotor principal (2).

**9.** Méthode selon la revendication 8,
**caractérisée en ce que** la prise en compte dudit critère de correction est effectuée par la prise en compte de l'angle de pas collectif ($A_{PC}$) courant des pales du rotor principal (2).

**10.** Méthode selon la revendication 8,
**caractérisée en ce que** la prise en compte dudit critère de correction est effectuée par la prise en compte du couple résistant opposé par le rotor principal (2) à l'encontre de son entraînement en rotation par un groupe de motorisation équipant le giravion (1).

**11.** Méthode selon l'une quelconque des revendications 1 à 10,
**caractérisée en ce que** la correction des mesures (V1) fournies par l'anémomètre de dérive (10) comprend les opérations successives suivantes :

-) application de premières fonctions de calcul (F1) calculant une vitesse-air du giravion, dite une première vitesse-air corrigée ($V_{C1}$), lesdites premières fonctions (F1) identifiant individuellement une composante longitudinale ($V_{C1}X$) et une composante latérale ($V_{C1}Y$) de la première vitesse-air corrigée ($V_{C1}$) selon les modalités suivantes :

$$V_{C1}X = V_M * \cos (V_A + A_1)$$

$$V_{C1}Y = V_M * \sin (V_A + A_2)$$

dans lesquelles premières fonctions (F1) de calcul, $V_{C1}X$ et $V_{C1}Y$ sont les valeurs respectives de la composante longitudinale et de la composante latérale de la première vitesse-air corrigée ($V_{C1}$), $V_M$ est l'amplitude de la vitesse du flux d'air mesuré par l'anémomètre de dérive (10), $V_A$ est la direction d'orientation du flux d'air mesuré par l'anémomètre de dérive (10), $A_1$ et $A_2$ sont des constantes prédéfinies de correction angulaire des composantes vectorielles de la vitesse du flux d'air mesuré par l'anémomètre de dérive (10), les valeurs respectives desdites constantes $A_1$ et $A_2$ étant identifiées par une opération de calibration en vol d'essai des premières fonctions (F1) de calcul.

-) application de deuxièmes fonctions (F2) de calcul affines calculant une deuxième vitesse-air corrigée ($V_{C2}$), lesdites deuxièmes fonctions (F2) de calcul identifiant des valeurs des amplitudes respectives de la composante longitudinale ($V_{C2}X$) et de la composante latérale ($V_{C2}Y$) de la première vitesse-air corrigée ($V_{C1}$) selon les modalités suivantes :

$$V_{C2}X = K1* V_{C1}X + K2*A_{PC} + N1$$

$$V_{C2}Y = K3* V_{C1}Y + N2$$

dans lesquelles deuxièmes fonctions (F2) de calcul, $V_{C2}X$ et $V_{C2}Y$ sont les valeurs respectives de la composante longitudinale et de la composante latérale de la deuxième vitesse-air corrigée ($V_{C2}$), K1, K2 et K3 sont des constantes dont les valeurs respectives sont identifiées par une opération de calibration en vol d'essai des deuxièmes fonctions (F2) de calcul, $A_{PC}$ est l'angle de pas collectif courant des pales du rotor principal (2), N1 et N2 sont des valeurs de sommation prédéfinies selon la pertinence recherchée de la mesure de la vitesse-air courante (TAS) du giravion (1).

-) application d'un filtrage de données (C4) par un filtre passe-bas (18) des valeurs individuelles de la composante longitudinale ($V_{C2}X$) et de la composante latérale ($V_{C2}Y$) de la deuxième vitesse-air corrigée ($V_{C2}$).

**12.** Méthode selon l'une quelconque des revendications 4 à 11,
**caractérisée en ce qu'**en vol stationnaire et/ou à basse vitesses d'évolution du giravion (1), la vitesse-air courante (TAS) du giravion (1) affichée par l'écran (9) est la vitesse-air calculée à l'issue de l'application dudit filtrage de données (C4).

**13.** Méthode selon l'une quelconque des revendications 1 à 12,
**caractérisée en ce que** la correction des mesures (V1) fournies par l'anémomètre de dérive (10) est opérée en prenant en compte plusieurs dits seuils de vitesse-air (S1, S2), dont au moins :

-) un premier seuil de vitesse-air (S1) conforme à une évolution du giravion (1) à basses vitesses, un premier mode de correction des mesures fournies par l'anémomètre de dérive (10) étant appliqué dans le cas où le giravion (1) évolue à une vitesse-air inférieure ou égale au premier seuil de vitesse-air (S1),
-) un deuxième seuil de vitesse-air (S2) conforme à une évolution du giravion (1) à vitesses transitoires entre basses vitesses et vitesses élevées d'évolution du giravion (1), un deuxième mode de correction des mesures (V1) fournies par l'anémomètre de dérive (10) étant appliqué dans le cas où le giravion évolue à une vitesse-air supérieure au premier seuil de vitesse-air (S1) et inférieure ou égale audit deuxième seuil de vitesse-air (S2).

**14.** Méthode selon la revendication 13,
**caractérisée en ce que** ledit deuxième mode de correction comprend une opération de correction complémentaire (C3) des mesures (V1) fournies par l'anémomètre de dérive (10) au moyen de troisièmes fonctions (F3) de calcul affines prenant en compte un paramètre de correction relatif à des mesures complémentaires (V2) fournies par un anémomètre annexe (11) installé à bord du giravion dans un emplacement au mieux dégagé du flux d'air produit par le souffle du rotor principal (2).

**15.** Méthode selon les revendications 11 et 14,
**caractérisée en ce que** lesdites troisièmes fonctions (F3) de calcul identifient individuellement une composante longitudinale ($V_{C3}X$) et une composante latérale ($V_{C3}Y$) d'une troisième vitesse-air corrigée ($V_{C3}$) selon les modalités suivantes :

$$V_{C3}X = K4* V_{C2}X + (1-K5)*VX$$

$$V_{C3}Y = K6* V_{C2}X + (1-K7)*VY$$

dans lesquelles troisièmes fonctions (F3) de calcul, $V_{C3}X$ et $V_{C3}Y$ sont les valeurs respectives de la composante longitudinale et de la composante latérale de la troisième vitesse-air corrigée ($V_{C3}$), K4, K5, K6 et K7 sont des constantes dont les valeurs respectives sont identifiées par une opération de calibration en vol d'essai des troisièmes fonctions (F3) de calcul, VX et VY sont les valeurs respectives de la composante longitudinale et de la composante latérale de la vitesse du flux d'air mesuré par l'anémomètre annexe (11).

**16.** Méthode selon la revendication 15,
**caractérisée en ce qu'**à des vitesses transitoires d'évolution du giravion (1), la vitesse-air courante (TAS) du giravion (1) affichée par l'écran (9) est la troisième vitesse-air corrigée ($V_{C3}$) rectifiée par un filtrage de données (C4) individuellement appliqué à la composante longitudinale ($V_{C3}X$) et à la composante latérale ($V_{C3}Y$) de la troisième vitesse-air corrigée ($V_{C3}$).

**17.** Méthode selon l'une quelconque des revendications 13 à 16,
**caractérisée en ce qu'**à des vitesses élevées d'évolution du giravion (1) à une vitesse-air supérieure au deuxième seuil de vitesse-air (S2), les mesures (V2) fournies par l'anémomètre annexe (11) sont exploitées pour afficher la vitesse-air courante (TAS) du giravion (1).

**18.** Giravion (1) équipé d'une installation anémométrique (8) pour la mise en oeuvre d'une méthode selon l'une quelconque des revendications 1 à 17, l'installation anémométrique (8) comprenant au moins un anémomètre omnidirectionnel (10, 11), des moyens de calcul (16) déduisant la vitesse-air courante (TAS) du giravion par exploitation des mesures (V1, V2) fournies par ledit au moins un anémomètre omnidirectionnel (10, 11) et un écran (9) d'affichage de la vitesse-air courante (TAS) du giravion (1) déduite par les moyens de calcul (16),
**caractérisé en ce que** ledit au moins un anémomètre omnidirectionnel, dit anémomètre de dérive (10), est implanté au sommet d'une dérive arrière (7) du giravion (1).

**19.** Giravion selon la revendication 18,
**caractérisé en ce que** les moyens de calcul (16) comprennent des moyens de comparaison (20) entre la vitesse-air du giravion (1) fournie par l'anémomètre de dérive (10) et au moins un seuil de vitesse-air (S1, S2) prédéfini, les moyens de calcul intégrant une règle de correction (15) apte à corriger les mesures (V1) fournies par l'anémomètre de dérive (10) en fonction des effets produits par la rotation d'au moins un rotor principal (2) équipant le giravion (1) sur les caractéristiques de la vitesse du flux d'air mesuré par l'anémomètre de dérive (10).

**20.** Giravion selon l'une quelconque des revendications 18 et 19,
**caractérisée en ce que** l'anémomètre de dérive (10) est plus particulièrement implanté au sommet d'une dérive arrière (7) du giravion (1) rehaussant un carénage (6) entourant un rotor arrière (3) équipant le giravion (1) dans le plan général du disque rotor dudit rotor arrière (3).

**21.** Giravion selon l'une quelconque des revendications 18 à 20,
**caractérisée en ce que** l'anémomètre de dérive (10) est équipé à sa base d'un bouclier (12) de protection vis-à-vis du flux d'air s'écoulant le long de la dérive arrière (7).

**22.** Giravion selon l'une quelconque des revendications 18 à 21,
**caractérisée en ce que** le giravion (1) est équipé d'un anémomètre annexe (11) fournissant aux moyens de calcul (16) une mesure complémentaire (V2) de la vitesse-air courante (TAS) du giravion (1) conjointement aux mesures (V1) fournies par l'anémomètre de dérive (10).

**Patentansprüche**

**1.** Verfahren zum Berechnen und Anzeigen der wahren Fluggeschwindigkeit (TAS) eines Drehflügers (1), umfassend mindestens eine Heckflosse (7) sowie mindestens einen Hauptrotor (2), der mindestens im Wesentlichen den Hauptauftrieb des Drehflügers vorsieht, und einen Heckrotor (3), der mindestens die Giersteuerung des Drehflügers (1) vorsieht, wobei das Verfahren eine Berechnungsoperation der wahren Fluggeschwindigkeit (TAS) des Drehflügers (1) aus Messungen (V1, V2), die von mindestens einem omnidirektionalen Anemometer (10, 11) geliefert werden, und eine Anzeigeoperation (19) der wahren Fluggeschwindigkeit (TAS) des Drehflügers (1) durch einen Bildschirm (9), die aus der Berechnungsoperation abgeleitet wird, umfasst,
**dadurch gekennzeichnet, dass** die Berechnungsoperation der wahren Fluggeschwindigkeit (TAS) des Drehflügers (1) aus Messungen (V1, V2) erfolgt, die von mindestens einem omnidirektionalen Anemometer (10) geliefert werden, das an der Spitze der Heckflosse (7) implantiert ist, wobei das mindestens eine omnidirektionale Anemometer somit als Flossenanemometer (10) bezeichnet wird.

2. Verfahren nach Anspruch 1,
**dadurch gekennzeichnet, dass** die wahre Fluggeschwindigkeit (TAS) des Drehflügers (1), der sich bei Geschwindigkeiten kleiner oder gleich mindestens einer vordefinierten Fluggeschwindigkeitsschwelle (S1, S2) des Drehflügers (1) bewegt, durch Korrektur von Messungen (V1) berechnet wird, die von dem Flossenanemometer (10) geliefert werden, als Funktion von Effekten, die von dem Luftstrom erzeugt werden, der durch die Rotation des Hauptrotors (2) generiert wird, auf die Charakteristiken der Geschwindigkeit des Luftstroms, der von dem Flossenanemometer (10) gemessen wird.

3. Verfahren nach Anspruch 2,
**dadurch gekennzeichnet, dass** die Korrektur von Messungen (V1), die von dem Flossenanemometer (10) geliefert werden, mindestens gemäß der Anwendung einer Korrekturregel (15) vorgenommen wird, die mindestens die Werte der Amplitude und der Orientierungen in Bezug auf allgemeine Erstreckungsachsen (L, T, Z) des Drehflügers (1) der Vektorkomponenten der Geschwindigkeit des Luftstroms, der von dem Flossenanemometer (10) gemessen wird, berichtigt.

4. Verfahren nach Anspruch 3,
**dadurch gekennzeichnet, dass** die Korrektur von Messungen (V1), die von dem Flossenanemometer (10) geliefert werden, außerdem ein Filtern von Daten (C4) umfasst, welche an Daten von Messungen (V1) angelegt werden, die von dem Flossenanemometer (10) geliefert werden, egal ob vor oder nach der Korrektur, die auf die von dem Flossenanemometer (10) gelieferten Messungen (V1) angewendet wird.

5. Verfahren nach den Ansprüchen 3 und 4,
**dadurch gekennzeichnet, dass** die Korrektur von Messungen (V1), die von dem Flossenanemometer (10) geliefert werden, spezifischer gemäß mindestens einer der folgenden Modalitäten vorgenommen wird:

-) Anwendung einer Phasenkorrektur (C1), welche die Winkelorientierung von jeder der Vektorkomponenten der Geschwindigkeit des Luftstroms einzeln berichtigt, der von dem Flossenanemometer (10) gemessen wird, im Verhältnis zu den longitudinalen und transversalen Erstreckungsachsen des Drehflügers (1),
-) Anwendung einer Amplitudenkorrektur (C2), welche die Amplituden jeder der Vektorkomponenten der Geschwindigkeit des Luftstroms einzeln berichtigt, der von dem Flossenanemometer (10) gemessen wird,
-) Anwendung eines Filterns der Daten (C4) durch ein Tiefpassfilter (18), das die Daten der Messungen (V1) behandelt, die von dem Flossenanemometer (10) geliefert werden.

6. Verfahren nach einem der Ansprüche 3 bis 5,
**dadurch gekennzeichnet, dass** die Korrekturregel (15) Korrekturparameter der Messungen (V1) integriert, die von dem Flossenanemometer (10) gemessen werden, deren Werte durch Kalibrieren der Korrekturregel (15) im Testflug identifiziert werden.

7. Verfahren nach einem der Ansprüche 3 bis 6,
**dadurch gekennzeichnet, dass** die Korrekturregel (15) aus Funktionen (F1, F2, F3) besteht, von denen bestimmte affine (F2, F3) aufeinanderfolgend angewendet werden, um die Messungen (V1) zu korrigieren, die von dem Flossenanemometer (10) geliefert werden.

8. Verfahren nach Anspruch 7,
**dadurch gekennzeichnet, dass** mindestens irgendeine der affinen Funktionen (F2, F3) einen Korrekturparameter umfasst, der ein Korrekturkriterium in Bezug auf die von dem Hauptrotor (2) verbrauchte mechanische Leistung (Pc) berücksichtigt.

9. Verfahren nach Anspruch 8,
**dadurch gekennzeichnet, dass** die Berücksichtigung des Korrekturkriteriums durch die Berücksichtigung des kollektiven Strömungssteigungswinkels ($A_{PC}$) der Schaufeln des Hauptrotors (2) durchgeführt wird.

10. Verfahren nach Anspruch 8,
**dadurch gekennzeichnet, dass** die Berücksichtigung des Korrekturkriteriums durch die Berücksichtigung des Widerstandsmoments durchgeführt wird, das von dem Hauptrotor (2) gegen seinen Drehantrieb durch eine Moto-

EP 2 944 572 B1

risierungsgruppe entgegengesetzt wird, die den Drehflüger (1) ausstattet.

11. Verfahren nach einem der Ansprüche 1 bis 10,
**dadurch gekennzeichnet, dass** die Korrektur von Messungen (V1), die von dem Flossenanemometer (10) geliefert werden, die folgenden aufeinanderfolgenden Operationen umfasst:

-) Anwendung erster Berechnungsfunktionen (F1), welche eine Fluggeschwindigkeit des Drehflügers berechnen, die als erste korrigierte Fluggeschwindigkeit ($V_{C1}$) bezeichnet wird, wobei die ersten Funktionen (F1) einzeln eine longitudinale Komponente ($V_{C1}X$) und eine laterale Komponente ($V_{C1}Y$) der ersten korrigierten Fluggeschwindigkeit ($V_{C1}$) gemäß den folgenden Modalitäten identifizieren:

$$Vc_1X = V_M * \cos (V_A + A_1)$$

$$Vc_1Y = V_M * \sin (V_A + A_2)$$

wobei die ersten Berechnungsfunktionen (F1), $V_{C1}X$ und $V_{C1}Y$, die jeweiligen Werte der longitudinalen Komponente und der lateralen Komponente der ersten korrigierten Fluggeschwindigkeit ($V_{C1}$) sind, $V_M$ die Amplitude der Geschwindigkeit des Luftstroms ist, der von dem Flossenanemometer (10) gemessen wird, $V_A$ die Orientierungsrichtung des Luftstroms ist, der von dem Flossenanemometer (10) gemessen wird, $A_1$ und $A_2$ vordefinierte Konstanten zur Winkelkorrektur der Vektorkomponente der Geschwindigkeit des Luftstroms sind, der von dem Flossenanemometer (10) gemessen wird, wobei die jeweiligen Werte der Konstanten $A_1$ und $A_2$ durch eine Kalibrierungsoperation der ersten Berechnungsfunktionen (F1) im Testflug identifiziert werden,
-) Anwendung zweiter affiner Berechnungsfunktionen (F2), die eine zweite korrigierte Fluggeschwindigkeit ($V_{C2}$) berechnen, wobei die zweiten Berechnungsfunktionen (F2) jeweilige Werte der Amplituden der longitudinalen Komponente ($V_{C2}X$) und der lateralen Komponente ($V_{C2}Y$) der ersten korrigierten Fluggeschwindigkeit ($V_{C1}$) gemäß den folgenden Modalitäten identifizieren:

$$Vc_2X = K1 * V_{C1}X + K2 * A_{PC} + N1$$

$$Vc_2Y = K3 * V_{C1}Y + N2$$

wobei die zweiten Berechnungsfunktionen (F2), $V_{C2}X$ und $V_{C2}Y$, die jeweiligen Werte der longitudinalen Komponente und der lateralen Komponente der zweiten korrigierten Fluggeschwindigkeit ($V_{C2}$) sind, K1, K2 und K3 Konstanten sind, deren jeweilige Werte durch eine Kalibrierungsoperation der zweiten Berechnungsfunktionen (F2) im Testflug identifiziert werden, $A_{PC}$ der kollektive Strömungssteigungswinkel der Schaufeln des Hauptrotors (2) ist, N1 und N2 vordefinierte Summierungswerte gemäß der Relevanz sind, die durch die Messung der wahren Fluggeschwindigkeit (TAS) des Drehflügers (1) gesucht wird,
-) Anwendung eines Filters von Daten (C4) durch ein Tiefpassfilter (18) der einzelnen Werte der longitudinalen Komponente ($V_{C2}X$) und der lateralen Komponente ($V_{C2}Y$) der zweiten korrigierten Fluggeschwindigkeit ($V_{C2}$).

12. Verfahren nach einem der Ansprüche 4 bis 11,
**dadurch gekennzeichnet, dass** im stationären Flug und/oder bei niedrigen Bewegungsgeschwindigkeiten des Drehflügers (1) die wahre Fluggeschwindigkeit (TAS) des Drehflügers (1), die vom Bildschirm (9) angezeigt wird, die berechnete Geschwindigkeit am Ende der Anwendung des Filters der Daten (C4) ist.

13. Verfahren nach einem der Ansprüche 1 bis 12,
**dadurch gekennzeichnet, dass** die Korrektur von Messungen (V1), die von dem Flossenanemometer (10) geliefert werden, unter Berücksichtigung mehrerer sogenannter Fluggeschwindigkeitsschwellen (S1, S2) vorgenommen wird, von denen mindestens:

-) eine erste Fluggeschwindigkeitsschwelle (S1) einer Bewegung des Drehflügers (1) bei niedrigen Geschwindigkeiten entspricht, wobei ein erster Korrekturmodus von Messungen, die von dem Flossenanemometer (10) geliefert werden, in dem Fall angewendet wird, wo sich der Drehflüger (1) bei einer Fluggeschwindigkeit kleiner oder gleich der ersten Fluggeschwindigkeitsschwelle (S1) bewegt,

-) eine zweite Fluggeschwindigkeitsschwelle (S2) einer Bewegung des Drehflügers (1) bei transitorischen Geschwindigkeiten zwischen niedrigen Geschwindigkeiten und erhöhten Geschwindigkeiten des Drehflügers (1) entspricht, wobei ein zweiter Korrekturmodus von Messungen (V1), die von dem Flossenanemometer (10) geliefert werden, in dem Fall angewendet wird, wo sich der Drehflüger bei einer Fluggeschwindigkeit größer als der ersten Fluggeschwindigkeitsschwelle (S1) und kleiner oder gleich der zweiten Fluggeschwindigkeitsschwelle (S2) bewegt.

14. Verfahren nach Anspruch 13,
**dadurch gekennzeichnet, dass** der zweite Korrekturmodus eine komplementäre Korrekturoperation (C3) von Messungen (V1), die von dem Flossenanemometer (10) geliefert werden, mit dritten affinen Berechnungsfunktionen (F3) umfasst, die einen Korrekturparameter relativ zu komplementären Messungen (V2) berücksichtigen, die von einem Nebenanemometer (11) geliefert werden, das an Bord des Drehflügers an einem Ort installiert ist, welcher bestmöglich von dem Luftstrom frei ist, der von dem Wind des Hauptrotors (2) erzeugt wird.

15. Verfahren nach den Ansprüchen 11 und 14,
**dadurch gekennzeichnet, dass** die dritten Berechnungsfunktionen (F3) einzeln eine longitudinale Komponente ($V_{C3}X$) und eine laterale Komponente ($V_{C3}Y$) einer dritten korrigierten Fluggeschwindigkeit ($V_{C3}$) gemäß den folgenden Modalitäten identifizieren:

$$Vc_3X = K4 * V_{C2}X + (1\text{-}K5) * VX$$
$$Vc_3Y = K6 * V_{C2}X + (1\text{-}K7) * VY$$

wobei die dritten Berechnungsfunktionen (F3), $V_{C3}X$ und $V_{C3}Y$, die jeweiligen Werte der longitudinalen Komponente und der lateralen Komponente der dritten korrigierten Fluggeschwindigkeit ($V_{C3}$) sind, K4, K5, K6 und K7 Konstanten sind, deren jeweilige Werte durch eine Kalibrierungsoperation der dritten Berechnungsfunktionen (F3) im Testflug identifiziert werden, VX und VY die jeweiligen Werte der longitudinalen Komponente und der lateralen Komponente der Geschwindigkeit des Luftstroms sind, der von dem Nebenanemometer (11) gemessen wird.

16. Verfahren nach Anspruch 15,
**dadurch gekennzeichnet, dass**, bei transitorischen Bewegungsgeschwindigkeiten des Drehflügers (1), die wahre Fluggeschwindigkeit (TAS) des Drehflügers (1), welche vom Bildschirm (9) angezeigt wird, die dritte korrigierte Fluggeschwindigkeit ($V_{C3}$) ist, die durch ein Filtern von Daten (C4) berichtigt wird, das einzeln auf die longitudinale Komponente ($V_{C3}X$) und die laterale Komponente ($V_{C3}Y$) der dritten korrigierten Fluggeschwindigkeit ($V_{C3}$) angewendet wird.

17. Verfahren nach einem der Ansprüche 13 bis 16,
**dadurch gekennzeichnet, dass**, bei erhöhten Bewegungsgeschwindigkeiten des Drehflügers (1) bei einer größeren Fluggeschwindigkeit als der zweiten Fluggeschwindigkeitsschwelle (S2), die Messungen (V2), die von dem Nebenanemometer (11) gemessen werden, genutzt werden, um die wahre Fluggeschwindigkeit (TAS) des Drehflügers (1) anzuzeigen.

18. Drehflüger (1), welcher mit einer Anemometeranlage (8) zur Durchführung eines Verfahrens nach einem der Ansprüche 1 bis 17 ausgestattet ist, wobei die Anemometeranlage (8) mindestens ein omnidirektionales Anemometer (10, 11), Berechnungsmittel (16), welche die wahre Fluggeschwindigkeit (TAS) des Drehflügers durch Nutzung von Messungen (V1, V2) ableiten, die von dem mindestens einen omnidirektionalen Anemometer (10, 11) geliefert werden, und einen Bildschirm (9) zur Anzeige der wahren Fluggeschwindigkeit (TAS) des Drehflügers (1), die durch die Berechnungsmittel (16) abgeleitet wird, umfasst,
**dadurch gekennzeichnet, dass** das mindestens eine omnidirektionale Anemometer, das als Flossenanemometer (10) bezeichnet wird, an der Spitze einer Heckflosse (7) des Drehflügers (1) implantiert ist.

19. Drehflüger nach Anspruch 18,
**dadurch gekennzeichnet, dass** die Berechnungsmittel (16) Vergleichsmittel (20) zwischen der Fluggeschwindigkeit des Drehflügers (1), die von dem Flossenanemometer (10) geliefert wird, und mindestens einer vordefinierten Fluggeschwindigkeitsschwelle (S1, S2) umfassen, wobei die Berechnungsmittel eine Korrekturregel (15) integrieren, die geeignet ist, die Messungen (V1), die von dem Flossenanemometer (10) geliefert werden, als Funktion der Effekte, die durch die Rotation des mindestens einen Hauptrotors (2) erzeugt werden, mit dem der Drehflüger (1) ausgestattet ist, auf die Charakteristiken der Geschwindigkeit des Luftstroms, der von dem Flossenanemometer (10) gemessen wird, zu korrigieren.

**20.** Drehflüger nach einem der Ansprüche 18 und 19,
**dadurch gekennzeichnet, dass** das Flossenanemometer (10) genauer an der Spitze einer Heckflosse (7) des Drehflügers (1) implantiert ist, welche eine Verkleidung (6) erhöht, die einen Heckrotor (3) umgibt, mit dem der Drehflüger (1) ausgestattet ist, in der allgemeinen Ebene der Rotorscheibe des Heckrotors (3).

**21.** Drehflüger nach einem der Ansprüche 18 bis 20,
**dadurch gekennzeichnet, dass** das Flossenanemometer (10) an seiner Basis mit einer Schutzabschirmung (12) gegen den Luftstrom ausgestattet ist, der die Heckflosse (7) entlang strömt.

**22.** Drehflüger nach einem der Ansprüche 18 bis 21,
**dadurch gekennzeichnet, dass** der Drehflüger (1) mit einem Nebenanemometer (11) ausgestattet ist, das an die Berechnungsmittel (16) eine komplementäre Messung (V2) der wahren Fluggeschwindigkeit (TAS) des Drehflügers (1) liefert, gemeinsam mit Messungen (V1), die von dem Flossenanemometer (10) geliefert werden.

## Claims

**1.** Method of calculation and display of the true airspeed (TAS) of a rotorcraft (1) comprising at least a rear fin (7) and at least one main rotor (2) providing at least essentially the main levitation of the rotorcraft (1) and a tail rotor (3) providing at least the yaw-steering of the rotorcraft (1), said method comprising an operation of calculating the true airspeed (TAS) of the rotorcraft (1) from measurements (V1, V2) provided by at least one omnidirectional anemometer (10, 11) and an operation of display (19) by a screen (9) of the true airspeed (TAS) of the rotorcraft (1) derived from said calculation operation,
**characterised in that** said operation of calculating the true airspeed (TAS) of the rotorcraft (1) is carried out from measurements (V1, V2) provided by at least one omnidirectional anemometer (10) located on top of said rear fin (7), said at least one omnidirectional anemometer thus being designated drift anemometer (10).

**2.** Method according to Claim 1,
**characterised in that** the true airspeed (TAS) of the rotorcraft (1) moving at speeds lower or equal to at least one predefined airspeed threshold (S1, S2) of the rotorcraft (1) is calculated by correcting the measures (V1) provided by the drift anemometer (10) based on the effects produced by the air flow generated by the rotation of the main rotor (2) on the speed characteristics of the air flow measured by the drift anemometer (10).

**3.** Method according to Claim 2,
**characterised in that** said correction of the measurements (V1) provided by the drift anemometer (10) is made according to at least the application of a correction rule (15) correcting at least the amplitude values and the orientations relative to the general extension axes (L, T, Z) of the rotorcraft (1) of the vector components of the speed of the air flow measured by the drift anemometer (10).

**4.** Method according to Claim 3,
**characterised in that** said correction of the measurements (V1) provided by the drift anemometer (10) further comprises a data filter (C4) applied to the measurement data (V1) provided by the drift anemometer (10), either before or after the correction applied to the measurements (V1) provided by the drift anemometer (10).

**5.** Method according to Claims 3 and 4,
**characterised in that** the correction of the measurements (V1) provided by the drift anemometer (10) is specifically made according to at least the following conditions:

-) applying a phase correction (C1) correcting the angular orientation individually of each of the vector components of the speed of the air flow measured by the drift anemometer (10) relative to the longitudinal and transverse extension axes of the rotorcraft (1).
-) applying an amplitude correction (C2) individually correcting the amplitudes of each of the vector components of the speed of the air flow measured by the drift anemometer (10).
-) applying a data filter (C4) by a low-pass filter (18) processing the measurement data (V1) provided by the drift anemometer (10).

6. Method according to any one of Claims 3 to 5,
**characterised in that** the correction rule (15) incorporates correction parameters of the measurements (V1) provided by the drift anemometer (10) whose values are identified by calibrating the correction rule (15) in flight test.

7. Method according to any one of Claims 3 to 6,
**characterised in that** the correction rule (15) is composed of functions (F1, F2, F3), including some linear functions (F2, F3) applied in succession to correct the measurements (V1) provided by the drift anemometer (10).

8. Method according to Claim 7,
**characterised in that** at least any one of said linear functions (F2, F3) comprises a correction parameter taking into account a correction criterion relating to the mechanical power (Pc) consumed by the main rotor (2).

9. Method according to Claim 8,
**characterised in that** the taking into account of said correction criterion is performed by taking account of the current collective pitch angle ($A_{PC}$) of the main rotor blades (2).

10. Method according to Claim 8,
**characterised in that** the taking into account of said correction criterion is performed by taking account of the resisting torque opposed by the main rotor (2) against the rotational driving thereof by a motorization group fitted to the rotorcraft (1).

11. Method according to any one of Claims 1 to 10,
**characterised in that** the correction of the measurements (V1) provided by the drift anemometer (10) includes the following successive operations:

-) application of the first calculation functions (F1) calculating an airspeed of the rotorcraft, said one first corrected airspeed ($V_{C1}$), said first functions (F1) individually identifying a longitudinal component ($V_{C1}X$) and a lateral component ($V_{C1}Y$) of the first corrected airspeed ($V_{C1}$) as follows:

$$V_{C1}X = V_M * \cos (V_A + A_1)$$

$$V_{C1}Y = V_M * \sin (V_A + A_2)$$

in which the first functions (F1) for calculating, $V_{C1}X$ and $V_{C1}Y$ are the respective values of the longitudinal component and the lateral component of the first corrected airspeed ($V_{C1}$), $V_M$ is the amplitude of the speed of the air flow measured by the drift anemometer (10), $V_A$ is the orientation direction of the air flow measured by the drift anemometer (10), $A_1$ and $A_2$ are predetermined constants of angular correction of the vector components of the speed of the air flow measured by the drift anemometer (10), the respective values of said constants $A_1$ and $A_2$ being identified by a calibration operation in test flight of the first functions (F1) of calculation.

-) application of second linear calculation functions (F2) calculating a second corrected airspeed ($V_{C2}$), said second calculation functions (F2) identifying the values of the respective amplitudes of the longitudinal component ($V_{C2}X$) and the lateral component ($V_{C2}Y$) of the first corrected airspeed ($V_{C1}$) as follows:

$$V_{C2}X = K1 * V_{C1}X + K2 * A_{PC} + N1$$

$$V_{C2}Y = K3 * V_{C1}Y + N2$$

in which second calculation functions (F2), $V_{C2}X$ and $V_{C2}Y$ are the respective values of the longitudinal component and the lateral component of the second corrected airspeed ($V_{C2}$), K1, K2 and K3 are constants whose respective values are identified by a calibration operation in test flight of the second calculation functions (F2), $A_{PC}$ is the current collective pitch angle of the main rotor blades (2), N1 and N2 are summing values predefined according to the required relevance of the measurement of the true airspeed (TAS) of the rotorcraft (1).
-) applying a data filter (C4) by a low-pass filter (18) of the individual values of the longitudinal component ($V_{C_2}X$) and the lateral component ($V_{C_2}Y$) of the second corrected airspeed ($V_{C_2}$).

12. Method according to any one of Claims 4 to 11,
    **characterised in that** in the hover and/or slow speeds of movement of the rotorcraft (1), the true airspeed (TAS) of the rotorcraft (1) displayed by the screen (9) is the air speed calculated after applying said data filter (C4).

13. Method according to any one of Claims 1 to 12,
    **characterised in that** the correction of the measurements (V1) provided by the drift anemometer (10) is made by taking into account several of said airspeed thresholds (S1, S2), including at least:

    -) a first airspeed threshold (S1) consistent with a movement of the rotorcraft (1) at low speeds, a first mode of correction of the measurements provided by the drift anemometer (10) being applied where the rotorcraft (1) moves at an airspeed lower than or equal to the first airspeed threshold (S1),
    -) a second airspeed threshold (S2) consistent with a movement of the rotorcraft (1) at speeds transitional between slow speeds and high speeds of movement of the rotorcraft (1), a second mode of correction of the measurements (V1) provided by the drift anemometer (10) being applied where the rotorcraft moves at an airspeed higher than the first airspeed threshold (S1) and lower than or equal to said second airspeed threshold (S2),

14. Method according to Claim 13,
    **characterised in that** said second mode of correction comprises an additional correction operation (C3) of the measurements (V1) provided by the drift anemometer (10) by means of third linear calculation functions (F3) taking into account a correction parameter related to the additional measurements (V2) provided by an ancillary anemometer (11) installed on board the rotorcraft in a location well clear of the air flow produced by the blowing of the main rotor (2).

15. Method according to Claims 11 and 14,
    **characterised in that** said third calculation functions (F3) individually identify a longitudinal component ($V_{C_3}X$) and a lateral component ($V_{C_3}Y$) of a third airspeed ($V_{C_3}$) corrected as follows:

$$V_{C_3}X = K4* V_{C_2}X + (1-K5)*VX$$

$$V_{C_3}Y = K6* V_{C_2}X + (1-K7)*VY$$

    in which third calculation functions (F3), $V_{C_3}X$ and $V_{C_3}Y$ are the respective values of the longitudinal component and the lateral component of the third corrected airspeed ($V_{C_3}$), K4, K5, K6 and K7 are constants whose respective values are identified by a calibration operation in test flight of the third calculation functions (F3), VX and VY are the respective values of the longitudinal component and the lateral component of the speed of the air flow measured by the ancillary anemometer (11).

16. Method according to Claim 15,
    **characterised in that** at the transitional speeds of movement of the rotorcraft (1), the true airspeed (TAS) of the rotorcraft (1) displayed by the screen (9) is the third corrected airspeed ($V_{C_3}$) corrected by a data filter (C4) individually applied to the longitudinal component ($V_{C_3}X$) and to the lateral component ($V_{C_3}Y$) of the third corrected airspeed ($V_{C_3}$).

17. Method according to any one of Claims 13 to 16,
    **characterised in that** at the high speeds of movement of the rotorcraft (1) at an airspeed higher than the second airspeed threshold (S2), the measurements (V2) provided by the ancillary anemometer (11) are used to display the true airspeed (TAS) of the rotorcraft (1).

18. Rotorcraft (1) equipped with an air data system (8) for the implementation of a method according to any one of Claims 1 to 17, the air data system (8) comprising at least one omnidirectional anemometer (10, 11), calculation means (16) computing the true airspeed (TAS) of the rotorcraft by using the measurements (V1, V2) provided by said at least one omnidirectional anemometer (10, 11) and a screen (9) displaying the true airspeed (TAS) of the rotorcraft (1) computed by the calculation means (16),
**characterised in that** said at least one omnidirectional anemometer, called drift anemometer (10), is located at the top of a rear fin (7) of the rotorcraft (1).

19. Rotorcraft according to Claim 18,
**characterised in that** the calculation means (16) comprise means of comparison (20) between the airspeed of the rotorcraft (1) provided by the drift anemometer (10) and at least one predefined airspeed threshold (S1, S2), the calculation means integrating a correction rule (15) suited to correcting the measurements (V1) provided by the drift anemometer (10) according to the effects produced by the rotation of at least one main rotor (2) fitted to the rotorcraft (1) on the characteristics of the speed of the air flow measured by the drift anemometer (10).

20. Rotorcraft according to any one of Claims 18 to 19,
**characterised in that** the drift anemometer (10) is more particularly located at the top of a rear fin (7) of the rotorcraft (1) heightening a fairing (6) surrounding a rear rotor (3) fitted to the rotorcraft (1) in the general plane of the rotor disc of said rear rotor (3).

21. Rotorcraft according to any one of Claims 18 to 20,
**characterised in that** the drift anemometer (10) is fitted at its base with a protection shield (12) in relation to the air flow running along the rear fin (7).

22. Rotorcraft according to any one of Claims 18 to 21,
**characterised in that** the rotorcraft (1) is fitted with an ancillary anemometer (11) providing to the calculation means (16) an additional measurement (V2) of the true airspeed (TAS) of the rotorcraft (1) together with the measurements (V1) provided by the drift anemometer (10).

fig.1

(a)

fig.2

EP 2 944 572 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4031756 A
- US 20060027702 A
- WO 0174663 A
- EP 1462806 A
- FR 2567270
- FR 2648233